(19) Europäisches Patentamt
European Patent Office
Office européen des brevets

(11) **EP 2 567 641 B1**

(12) **EUROPÄISCHE PATENTSCHRIFT**

(45) Veröffentlichungstag und Bekanntmachung des Hinweises auf die Patenterteilung:
**29.01.2014  Patentblatt 2014/05**

(51) Int Cl.:
**A47J 27/092** (2006.01)  **A47J 36/38** (2006.01)

(21) Anmeldenummer: **12183868.4**

(22) Anmeldetag: **11.09.2012**

(54) **Druckgargerät mit Rohrleitung für entweichenden Dampf und Wassereinspritzung**

Pressure cooker with pipe for discharging steam and water injection

Appareil de cuisson sous pression avec conduite d'échappement de vapeur  et injection d'eau

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.09.2011  DE 102011112828**

(43) Veröffentlichungstag der Anmeldung:
**13.03.2013  Patentblatt 2013/11**

(73) Patentinhaber: **MKN Maschinenfabrik Kurt Neubauer GmbH & Co. KG
38300 Wolfenbüttel (DE)**

(72) Erfinder:
• **Kaczmarczyk, Marian
38154 Königslutter (DE)**
• **Ruhe, Dirk
38667 Bad Harzburg (DE)**
• **Sprenger, Rene
38304 Wolfenbüttel (DE)**

(74) Vertreter: **Strobel, Wolfgang et al
Kroher-Strobel
Rechts- und Patentanwälte
Bavariaring 20
80336 München (DE)**

(56) Entgegenhaltungen:
EP-A1- 1 342 441      WO-A1-2010/030051
DE-C- 929 170        FR-A1- 2 894 801
KR-A- 20080 090 629  KR-Y1- 200 443 109

EP 2 567 641 B1

## Beschreibung

Die Erfindung betrifft ein Druckgargerät für Kochgut mit einem Kochbehälter, einem Kochgerätedeckel, einer Dichtungsanordnung zwischen dem Kochbehälter und dem Kochgerätedeckel und einem durch Schließen des Kochgerätedeckels druckdicht abgeschlossenen Garraum sowie mit Mitteln zum Abbau des Druckes im Garraum, bei dem im Kochgerätedeckel oder im Kochbehälter oberhalb des Kochgutes eine Öffnung des Garraums vorgesehen ist, bei dem die Öffnung über eine Rohrleitung mit einem Eingang einer Anordnung verbunden ist, über welche Anordnung aus dem Garraum entweichender Dampf einem Geräteausgang zugeführt wird, bei dem die Anordnung mittels eines Ventiles verschließbar ist, bei dem der Anordnung eine Wassereinspritzung zugeordnet ist, über die Wasser in den aus dem Garraum über die Anordnung entweichenden Dampf einspritzbar ist.

Druckgargeräte bieten die Möglichkeit, Speisen unter Druck bei Luftabschluss zu garen. Diese Zubereitungsform für Speisen ermöglicht eine besonders schonende und auch schnelle Form der Produktzubereitung. Solche Druckgargeräte gibt es sowohl für Anwendungen in Haushalten, als auch als Großküchengerät.

Mehrere Gerätetypen dieser Druckgargeräte, auch als Druckgarer bezeichnet, sind am Markt verfügbar. Dazu gehören Druckgarbraisieren, bei denen die Zubereitung der Speisen direkt in einem Braisiertigel erfolgt, Druckkochkessel, bei denen die Zubereitung in einem Kesselbehälter erfolgt, und Dampfgarer, bei denen die Zubereitung der Speisen in hierfür vorgesehenen Gastronorm-Behältern erfolgt. Diese Gastronorm-Behälter können aber auch zusätzlich bei den beiden erstgenannten Typen eingesetzt werden.

Bei allen Druckgargeräten muss nach dem Abschluss des Garprozesses, der wie erwähnt unter Druck stattgefunden hat, dieser Druck im Garraum auch wieder abgebaut werden. Dafür gibt es verschiedene Möglichkeiten. So ist zum Beispiel bei Dampfgarern bekannt, Wasser als Kühlmedium direkt in den Garraum einzuspritzen. Durch die Abkühlung erfolgt automatisch der gewünschte Druckabbau. Ein in den Gastronorm-Behältern integrierter Ablauf ermöglicht das Abfließen des entstehenden unerwünschten Kondensates. Nachteilig sind der entstehende Wasserverbrauch und die durch das Abfließen des Kondensates entstehenden Verluste und Abwässer.

Aus der EP 1 238 613 B1 ist es bekannt, die Abkühlung in Form einer Mantelkühlung oder Deckelkühlung vorzunehmen. Dabei wird der Behältermantel oder ein Teil desselben als Doppelwand ausgeführt und durch zumindest einen Abschnitt dieser Wandung ein Kühlmedium geleitet. Derartige und ähnliche Ideen werden vielfach in der Praxis eingesetzt, allerdings ergibt sich daraus ein sehr langsamer Druckabbauprozess aufgrund des relativ schlechten Wärmeüberganges.

Aus der EP 1 342 441 B1 ist dagegen ein gattungsgemäßes Druckgargerät bekannt. Hier wird der Dampf durch eine Öffnung in eine Rohrleitung geleitet, die dann zu einem Ventil oder einem anderen Raum führt. In diesen Raum wird bei Bedarf Wasser in den aus dem Garraum entweichenden Dampf eingespritzt. Dies führt zu einer kontrollierten Kondensation des Dampfes in diesem Bereich. Durch die Wassereinspritzung in den Dampf ist gewährleistet, dass die Austrittstemperaturen des entstehenden Kondensats unter 80 °C liegen.

In der EP 1 342 441 B1 wird auch schon vorgeschlagen, den Garraum mit entsprechenden Drucksensoren auszurüsten und gesteuert von den gemessenen Druckwerten den Druckabbau geregelt zu betreiben, etwa in mehreren Stufen, um schonend den Druckabbau bei empfindlichen Gargütern vorzunehmen, oder auch beschleunigt, wenn es sich um unempfindliche Gargüter handelt.

Trotz dieser ausgezeichnet arbeitenden und in der Praxis eingesetzten Druckgargeräte besteht unverändert der Bedarf an weiteren Verbesserungen.

Aus der DE 929 170 ist ein kippbares Großkochgefäß bekannt, bei dem eine einfache, brauchbare Lösung sowohl für die Zufuhr des Brennstoffes zu als auch für die Abführung der Abgase aus diesem Großkochgefäß geschaffen werden soll.

Die KR 10-2008-0090629 A zeigt einen elektrischen Druckreiskocher mit einer Dampfablasssicherheitseinrichtung. Es soll die Bedienungsperson vor Verbrennungen durch den heißen Ablassdampf schützen.

Einen weiteren Druckreiskocher, bei dem ein Schalldämpfer eingebaut ist, zeigt die WO 2010/030051 A1.

Die FR 2 894 801 A1 zeigt ein Druckgargerät mit einem separaten Dampfauffangbehälter.

Die EP 1 342 441 A1 zeigt ein Druckgargerät, bei dem oberhalb des Kochgutes eine Öffnung vorgesehen ist, die über eine Rohrleitung mit einem Stellventil verbunden ist, das einen Eingang und einen Ausgang aufweist. Über diese Rohrleitung kann Dampf abgelassen und Frischluft zugelassen werden.

Bei herkömmlichen Druckgargeräten hat der Fachmann bisher in Kauf genommen, dass mit dem Druckabbau insbesondere dann, wenn ein schneller Druckabbau bei zuvor relativ hohem Druck gewünscht war, auch eine entsprechende Geräuschentwicklung verbunden war. Dies gilt sowohl für eine Wassereinspritzung direkt in den Garraum, die mit einer erheblichen Geräuschentwicklung verbunden ist, wenn Wasser auf relativ heiße und unter Druck stehende Objekte trifft, und auch bei einer Zuführung von Wasser in die Wandung. Die rasch erfolgten Druckänderungen verbunden mit dem Aufeinandertreffen von kaltem Wasser und heißer Wandung des Garraumes führen zu einer erheblichen Geräuschentwicklung bei recht unterschiedlichen Frequenzen in akustischen, für den Nutzer des Gargerätes hörbaren und störenden Bereichen.

Geräusche können auch dann auftreten, wenn eine Wassereinspritzung in einem Bereich eines Stellventils außerhalb des Garraums erfolgt, also bei einer ansonsten sehr vorteilhaften Ableitung des im Garraum entstandenen Dampfes während des Druckabbaus über eine Rohrleitung.

Aus der KR 20-0443109 Y1 ist ein Druckgargerät für Kochgut, insbesondere Reis, bekannt, mit einem Kochbehälter, einem Kochgerätedeckel, einer Dichtungsanordnung dem Kochbehälter und dem Kochgerätedeckel und einem durch Schließen des Kochgerätedeckel druckdicht abgeschlossenen Garraum sowie Mittel zum Abbau des Druckes im Garraum.Ich Kochgerätedeckel ist oberhalb des Kochbehälters eine Öffnung vorgesehen, welche über eine Leitung mit einer Anordnung, hier in Form einer Dampfablasseinrichtung, den unter Hochdruck bei hoher Temperatur sich befindenden Dampf in die Küche ablässt. Durch den Einsatz eines flexiblen Elements in der Leitung, werden die Schwingungen aus der Anordnung vollständig vom Garraum getrennt und führen dadurch auch im Garraum selbst nicht mehr zu Schwingungen der Garraumwandung oder von sonstigen Objekten.

Ist die Anordnung jedoch mit dem Abwassernetz verbunden, so besteht die Gefahr, dass Restdampf in das Abwassernetz eintritt. Dieser Restdampf kann dann zu zusätzlichen Geräuschemissionen im Abwassernetz führen, die unerwünscht sind. Unter Umständen könnten auch Beschädigungen in den nachfolgenden Rohren auftreten.

Außerdem können Druckunterschiede zwischen dem Abwassernetz und der Anordnung bzw. in den Leitungen und im Garraum des Gargerätes bestehen. Dies kann zu Unterdruck im System führen, wodurch die Gefahr eines Rücksaugens aus dem Abwassernetz besteht.

Der vorliegenden Erfindung liegt deshalb die Aufgabe zugrunde, ein Druckgargerät für Kochgut zu schaffen, bei dem die oben genannten Nachteile vermieden werden und mit dem eine geräuscharme Arbeitsweise einerseits als auch ein sicherer Anschluss an das Abwassernetz andererseits ermöglicht wird.

Diese Aufgabe wird durch die Merkmale des Patentanspruchs 1 gelöst.

Dadurch, dass in der Anordnung, eine Blende vorgesehen ist, die einen Lufteinlass aufweist, wird verhindert, dass aus dem Abwassersystem Luft angesaugt werden kann, wobei das potentielle Geräusch eines solchen Ansaugens durch eine Blende vermieden wird.

Durch den Lufteinlass entsteht die Möglichkeit des Druckausgleichs und mögliche, durch mangelnden Druckausgleich entstehende Geräuschemissionen, beispielsweise Blubbern in einem gegebenenfalls eingesetzten Siphon, können vorteilhafter Weise vermieden werden.

Umgekehrt kann mittels der Blende vorteilhafterweise ein Austreten von Dampf, der das Raumklima beeinträchtigt, vermieden werden.

Natürlich ist es erforderlich, dass das Ablöschwasser und der auskondensierte Wrasen abfließen können. Hierzu wird vorteilhaft im unteren Bereich des Querschnitts der Blende eine Ablauföffnung ausgebildet. Diese Ablauföffnung wird so dimensioniert, dass sich eine Wasservorlage im unteren Bereich des Ablöschkastens bilden kann, die sich vorteilhaft auf die Ablöschung auswirkt und gleichwohl das Wasser in ausreichendem Maße abfließen lässt.

An sich bestünde die Möglichkeit, dass durch diese Ablauföffnung auch Luft zum Druckausgleich angesaugt wird. Da in diesem Fall durch diese Öffnung sowohl Medien abfließen als auch angesaugte Luft anströmen würde, käme es zu einer gegenseitigen Behinderung dieser Medien und es könnten auch dadurch Geräuschemissionen entstehen, etwa ein Blubbern in der im Ablöschkasten befindlichen Wasservorlage.

Dadurch, dass die Blende einen Lufteinlass aufweist, werden diese Gefahren von Geräuschemission vermieden, wobei der Lufteinlass, der als Rücksaugöffnung dient, in seiner Größe und Abmessung auf das Gargerät abgestimmt werden kann. Hierdurch wird ein Ansaugen von Luft ermöglicht und das Entstehen eines Unterdrucks im System vermieden.

Als flexibles Element, das zumindest einen Teil der Rohrleitung bildet, werden bevorzugt ein flexibles Schlauchelement in Form insbesondere eines Silikonschlauches oder auch mehrere derartige Schlauchelemente eingesetzt. Ein Abschnitt der im Übrigen starren Leitung wird mithin durch ein flexibles Stück ersetzt.

Alternativ oder auch zusätzlich ist es auch denkbar, die Rohrleitung aus mehreren ineinander gesteckten Rohrleitungsabschnitten aufzubauen. An den Verbindungsstellen, an denen je zwei Abschnitte zusammengesteckt sind, besteht somit eine Kontaktfläche zwischen diesen beiden Abschnitten. Diese Kontaktfläche wird mittels einer umlaufenden flexiblen Dichtung zwischen den beiden Abschnitten ausgestaltet und so einerseits abgedichtet und andererseits auch akustisch getrennt.

Die Geräuschentwicklung bleibt auf diese Weise auf den separaten Ablöschkasten beschränkt, der einerseits problemlos akustisch gedämmt werden kann und andererseits im Vergleich zu herkömmlichen Anordnungen durch seine sehr viel kleinere Abmessung und die entkoppelte Anregung auch deutlich weniger zu einer Geräuschentwicklung neigt.

Als besonders vorteilhaft hat sich für das flexible Schlauchelement ein Silikonschlauch herausgestellt. Dieser ist darüber hinaus temperaturfest im gesamten, möglicherweise interessierenden Temperaturbereich, der von dem Dampf eingenommen werden kann, welcher während des Druckabbaus aus dem Garraum entweicht.

Schließlich ist es weiter bevorzugt, wenn auch abflussseitig an den Ablöschkasten wiederum Ablaufrohre anschließen, die als Hochtemperaturrohre ausgebildet sind und insbesondere mittels flexibler Dichtungen an dem Ablöschkasten angeschlossen sind und / oder flexible Rohrabschnitte aufweisen. Auf die Weise findet außerdem eine Schwingungsentkopplung des Ablöschkastens von dem Abwassernetz statt und vermeidet auf diese Weise auch eine Geräuschübertragung in diese Richtung bzw. aus dieser Richtung.

Der Ablöschkasten mit der Einspritzung des Wassers in den aus dem Garraum entweichenden Dampf besitzt hierfür bevorzugt eine sprunghafte Querschnittserweiterung oder vergrößert in anderer Form den Querschnitt des Strömungskanals für den strömenden Dampf. Diese Querschnittserweiterung birgt tendenziell die Gefahr, dass aus dem Abwassersystem Luft angesaugt werden könnte. Das potentielle Geräusch eines solchen Ansaugens wird jedoch durch das gleichzeitige Vorsehen einer Blende wiederum vermieden. Es tritt also ein synergistischer Effekt durch die Abkopplung der Schwingungen durch den flexiblen Schlauchabschnitt, das Vorsehen des Ablöschkastens, der durch den flexiblen Schlauchabschnitt abgekoppelt wird, und das Vorsehen einer Blende auf, welcher die durch den Ablöschkasten sonst begünstigte Geräuschentwicklung nun wiederum vermeidet.

Bei der Nutzung der sich gegenseitig unterstützenden und miteinander zusammen wirkenden Elemente wird ein physikalischer Effekt genutzt. Der beim Abbau hoher Drücke im Garraum eines Druckgargerätes ausströmende Dampf erhält in der Erfindung während der Ableitung die Möglichkeit zu expandieren. Diese Möglichkeit wird ihm im Ablöschkasten gegeben. Bei der Vergrößerung des pro Wegeinheit durchströmten Raumvolumens wird auf diese Weise die Strömungsgeschwindigkeit des strömenden Dampfes verringert.

Geht man von der vereinfachenden Annahme aus, dass sich der Druck in dem Bereich der Querschnittserweiterung nicht wesentlich ändert, so stehen die Geschwindigkeiten $v_1$ und $v_2$ vor und nach der Querschnittserweiterung und die Querschnitte $A_1$ und $A_2$ vor und nach der Querschnittserweiterung aufgrund des konstanten Volumenstroms in dem Verhältnis

$$\frac{v_1}{v_2} = \frac{A_2}{A_1}$$

Berücksichtigt man, dass die Querschnittsflächen kreisförmig sind, also $A = \pi r^2$ beträgt, wobei r der Radius der Rohrleitung bzw. des Ablöschkastens ist, so ergibt sich durch Umstellung und Auflösung der Gleichung:

$$v_2 = v_1 * \frac{\pi r_1{}^2}{\pi r_2{}^2}$$

Eine Vergrößerung des Querschnitts wirkt sich mithin quadratisch aus, so dass bereits eine Verdopplung des Radius eine sich sehr positiv auf die Ablöschung des Dampfes bzw. des Wrasens auswirkende Verlangsamung der Strömungsgeschwindigkeit um den Faktor 4 ergibt.

Die auf diese Weise entstehende Erweiterung des Querschnitts bietet neben der Verlangsamung der Strömungsgeschwindigkeit der Wrasen weitere Vorteile. An dem abrupten Übergang von dem zunächst kleineren Querschnitt auf den dann größeren Querschnitt entstehen Verwirbelungen im Fluid. Während es sonst in der Technik und bei den gebräuchlichen Anwendungen stets erwünscht ist, den Öffnungswinkel eines Diffusors so auszulegen, dass die Fluide ohne Turbulenzen durchströmen, ist es in der vorliegenden Erfindung gerade erwünscht, eine Verwirbelung der Wrasen zu erzielen. Auf diese Weise kann nämlich in der anschließend erfindungsgemäß durchgeführten Wassereinspritzung unmittelbar eine gute Vermischung der Wassertröpfen mit dem Wrasen erreicht werden.

Schließlich kann erreicht werden, dass die Wrasen aufgrund ihrer verlangsamten Strömungsgeschwindigkeit an der außerdem deutlich vergrößerten zur Verfügung stehenden Oberfläche auch noch besser auskondensieren.

Ein weiterer, sehr nützlicher Effekt entsteht dadurch, dass sich an der Aufweitung der Rohrleitung im Ablöschkasten der Druck im Fluid geringfügig erhöht. Dieser Effekt lässt sich wiederum günstig mit der nachfolgenden Ablöschung kombinieren. Bei der Ablöschung ändert wie gewünscht das Fluid seinen Aggregatzustand von zunächst gasförmig in dann flüssig. Mit dieser Änderung des Aggregatzustandes wird auch die Dichte geändert. Dadurch reduziert sich das Volumen. Diese Volumenreduzierung erzeugt wiederum einen Unterdruck, der auf diese Weise ausgeglichen wird.

Die bei der Expansion des strömenden Dampfes bzw. Wrasens entstehende Verwirbelung wird beim Ablöschen durch das Einspritzen von Wasser weiter unterstützt. Diese Verwirbelung ist vorteilhaft für die Kondensation des Dampfes, da Kaltwasser und heißer Dampf auf diese Weise noch besser vermischt werden und zugleich ein guter Temperaturübergang stattfindet.

Durch den Einsatz eines Ablöschkastens für die Wassereinspritzung kann dies räumlich konzentriert werden. Erforderlich ist er für den oben erwähnten Unterdruck, der bei der Expansion, Verwirbelung und Ablöschung entsteht, zusätzlich zu den bereits oben erwähnten Druckerhöhungseffekt an der Querschnittserweiterung einen zusätzlichen Ausgleich durch Ansaugen von Luft zu ermöglichen.

Bei einer derart verbesserten Dampfablöschung entstehen durch die Expansion, Verwirbelung, Ablöschung und Luftansaugung innerhalb des Ablöschkastens vermehrt Geräuschemissionen. Zu diesen Geräuschemissionen zählen unter anderem Schwingungen. Diese Schwingungen wiederum werden durch ein flexibles Element, insbesondere durch einen Silikonschlauch, von dem Gargerät vollständig entkoppelt und bleiben somit ohne Rückwirkungen.

Wie oben bereits erwähnt, wird bevorzugt außerdem eine Entkopplung des Ablöschkastens zum Abwassernetz vorgesehen. Hierzu werden gezielt Hochtemperaturrohre, insbesondere aus Kunststoff, eingesetzt. Diese werden mit flexiblen Dichtungen ausgestattet, die in Reihe zwischen den einzelnen Rohrabschnitten vorgesehen werden. Ein Einsatz von gummierten Schellen zur Befestigung am Gehäuse entkoppelt zusätzlich die Schwingungen der Ablöschung vom nachfolgenden Abwassernetz.

Als positiver zusätzlicher Effekt ist noch anzumerken, dass auch etwa im Abwassernetz aus anderen Gründen auftretende Schwingungen auf diese Weise von der Anordnung ferngehalten werden können und ebenfalls keine Wirkung entfalten.

Auch die reduzierte Geschwindigkeit des strömenden Dampfes selbst reduziert bereits die Geräuschentwicklung.

Durch die Entkopplung wird insbesondere die Ausbreitung von Geräuschspitzen vermieden, die auch als Peaks bezeichnet werden. Dadurch wird trotz des sehr schnellen Druckabbaus eine Schalldämpfung und somit eine Geräuschminimierung erzielt.

Eine besonders vorteilhafte Ausführungsform der Erfindung zeichnet sich dadurch aus, dass die Rohrleitung, insbesondere das flexible Schlauchelement, einen gleichbleibenden Querschnitt besitzen, welcher sich von der Öffnung des Garraums hin bis zum Ablöschkasten mit der Wassereinspritzung konstant bleibt.

In der Praxis hat es sich als vorteilhaft erwiesen, wenn in dem Ablöschkasten der Anordnung die Wassereinspritzung in einem Abstand von 50 mm oder mehr von der Erweiterung des Querschnitts der Rohrleitung angeordnet ist.

Dadurch bekommt der Dampf die Möglichkeit aufzufächern, bevor er erstmals mit einer Wassereinspritzung beaufschlagt wird. Diese Auffächerung vor der Wassereinspritzung hat sich ebenfalls als geräuschreduzierend erwiesen.

Bevorzugt ist weiter vorgesehen, die Wassereinspritzung mittels mehrerer Düsen vorzunehmen. Eine Einspritzung mit mehreren Düsen hat sich als effektiver herausgestellt, als eine Wassereinspritzung, die nur mittels einer einzelnen Düse erfolgt.

Da mehrere Düsen aufwändiger sind, als nur eine Düse, sollte auch das Verhältnis von Aufwand zu Nutzen in Betracht gezogen werden. Unter Berücksichtigung dieses Gesichtspunktes ist es bevorzugt, wenn zwei Düsen für die Wassereinspritzung verwendet werden.

Werden zwei Düsen eingesetzt, so hat es sich als vorteilhaft erwiesen, wenn die beiden Düsen der Wassereinspritzung in einem Abstand von zumindest 50 mm, insbesondere von 100 mm oder mehr, voneinander angeordnet sind.

Dies hat sich als besonders sinnvoll im Hinblick auf den Platzaufwand einerseits und die Leistung und die Vorteile andererseits herausgestellt.

Von Vorteil ist es weiter, wenn sich in der Rohrleitung ein Stellventil befindet. Durch ein Stellventil lassen sich verschiedene Arten eines Druckabbaus unter verschiedenen äußeren Randbedingungen oder auch bei verschiedenen im Garraum des Druckgargerätes zubereiteten Speisen geeignet ansteuern. Vorschläge für eine solche Ansteuerung sind beispielsweise in der noch nicht veröffentlichten Deutschen Patentanmeldung 10 2011 107 255.5 beschrieben.

Von Vorteil ist es weiter, wenn die Wassereinspritzung in den Ablöschkasten von oben erfolgt.

Weiter ist es bevorzugt, wenn die eine oder mehreren Düsen der Wassereinspritzung als Schlitzdüsen aufgebaut sind. Dies ist sinnvoll einsetzbar, um einen Wasservorhang aufzubauen. Die Schlitzdüsen unterstützen eine gute Verwirbelung des eingespritzten Wassers mit den Wrasen im Dampf, womit sehr gute Ergebnisse beim Ablöschvorgang bei vergleichsweise geringem Fertigungsaufwand erreicht werden. Gute Ergebnisse beim Ablöschvorgang wiederum unterstützen eine geringe Geräuschentwicklung.

Die Blende am Ausgang des Ablöschkastens hat einen weiteren Vorteil. Sie verhindert ein Eintreten von Restdampf in das Abwassernetz. Dieser Restdampf könnte ohne eine Blende zusätzliche Geräuschemissionen im Abwassernetz verursachen, die ebenfalls nicht erwünscht sind. Unter Umständen könnten auch Beschädigungen in den nachfolgenden Rohren auftreten, die auf diese Weise vermieden werden. Hinzu kommt eine zusätzliche Ausfallsicherheit. Selbst dann, wenn aufgrund von Defekten in der Wasserzufuhr zur Wassereinspritzung oder aus anderen Gründen ein Ausfall der Ablöschung der Wrasen eintritt, kann durch das Vorsehen der Blenden das Eintreten von Wrasen in das Abwassernetz durch die Blende vermieden werden.

Die Wrasen oder Fluide können beispielsweise mit einer Temperatur von mehr als 80 °C in den Ablöschkasten eingeleitet werden. Es wird ohne weitere konstruktive Maßnahmen eine ordnungsgemäße Ablöschung vor den Eintritt in das Abwassernetz sicher gestellt.

Weitere bevorzugte Merkmale der Erfindung sind in den Unteransprüchen und in der folgenden Beschreibung der Figuren näher erläutert:

Im Folgenden wird anhand der Zeichnung ein Ausführungsbeispiel der Erfindung näher dargestellt. Es zeigen:

Figur 1    eine schematische Darstellung eines Druckgargerätes nach der Erfindung,

Figur 2    eine vergrößerte Darstellung einer Anordnung für das Abführen des Dampfes in der Ausführungsform aus der Figur 1;

Figur 3    eine schematische Darstellung eines Ablöschkastens in der Anordnung aus Figur 2; und

**Figur 4**    eine detaillierte Ansicht einer Blende aus dem Ablöschkasten in der Figur 3, von der Seite gesehen.

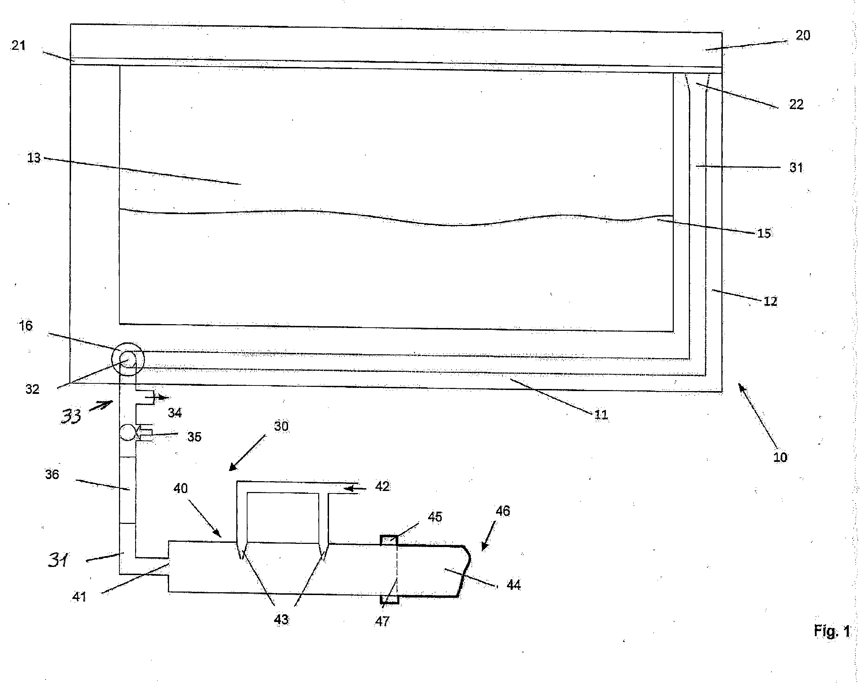

Ein erfindungsgemäßes, rein schematisch in der **Figur 1** dargestelltes Druckgargerät besitzt einen Garraum oder Kochbehälter (10) mit einem Boden (11) und einem umlaufenden Mantel (12). Der Mantel (12) kann zylindrisch oder mit einem quadratischen, rechteckigen oder auch anderen Querschnitt geformt sein. Der Mantel (12) ist in der dargestellten Ausführungsform ein Doppelmantel.

Der Kochbehälter (10) weist einen Innenraum (13) auf. Der Innenraum (13) kann unter Druck gesetzt werden.

In dem Kochbehälter (10) ist ebenfalls schematisch eine Speise (15) dargestellt, die zubereitet werden soll, beispielsweise Gulasch. Das Gulasch befindet sich in einer Atmosphäre im Innenraum (13), die Luft sein kann, aber auch zusätzlich mit Dampf angereichert sein könnte.

Etwaige vorhandene zusätzliche Aggregate wie Heizung, Steuerung, Regelung, Dampferzeuger, etc. sind hier nicht dargestellt.

Nach oben ist der Kochbehälter (10) durch einen abnehmbaren oder aufklappbaren Kochgerätedeckel (20) abgeschlossen. Bei geöffnetem Kochgerätedeckel (20) können Speisen und Zutaten zugeführt werden. Möglich ist es auch, diese Öffnung zum Einfüllen von Speisen türartig vorzusehen. Nach dem Verschließen der Öffnung durch den Kochgerätedeckel (20) entsteht somit ein abgeschlossener Innenraum (13). Zwischen dem Kochbehälter (10) und dem Kochgerätedeckel (20) ist eine Dichtungsanordnung (21) vorgesehen. Die Dichtungsanordnung (21) stellt sicher, dass der Innenraum (13) druckdicht abgeschlossen ist und somit als Garraum dienen kann.

In der in Figur 1 dargestellten Ausführungsform ist außerdem vorgesehen, dass der Kochbehälter (10) um eine Kippachse (16) gekippt werden kann. Dies ist bei der Zubereitung etwa von Gulasch oder Suppen von Vorteil, um diese durch Kippen des Kochbehälters (10), üblicherweise in der Form eines Tiegels, entnehmen zu können.

In dem Kochgerätedeckel (20) ist nun bevorzugt an seiner höchsten Stelle eine Öffnung (22) vorgesehen. In einer nicht dargestellten Ausführungsform ist diese Öffnung (22) in dem Mantel (12) des Kochbehälters (10) angeordnet. An der Öffnung (22) ist eine Rohrleitung (31) angeschlossen. Durch die Rohrleitung (31) kann nach einem abgeschlossenen Garvorgang der Druck aus dem Innenraum (13) abgeleitet werden. Hierzu wird die während des Garvorganges verschlossene Öffnung (22) geöffnet, sodass der Dampf mit den Wrasen in die Rohrleitung (31) eintreten kann.

Die Rohrleitung (31) verläuft durch die seitliche Doppelwandung des Mantels (12) aus dem Tiegel beziehungsweise Kochbehälter (10). In der dargestellten Ausführungsform ist vorgesehen, dass die Rohrleitung (31) in Form einer Durchführung (32) durch die Kippachse (16) des Kochbehälters (10) verläuft. Bei den anderen Ausführungsformen, die hier nicht dargestellt sind, kann etwa vorgesehen werden, die Rohrleitung (31) durch die Drehachse des Kochgerätedeckels (20) verlaufen zu lassen, die ein Aufschwenken dieses Kochgerätedeckels (20) vom Kochbehälter (10) ermöglicht.

Die Rohrleitung (31) ist Teil einer Anordnung (30), die noch eine Reihe weiterer, im Folgenden beschriebener Elemente umfasst und dazu dient, den Überdruck im Garraum (13) des Kochbehälters (10) bei Bedarf durch Abführen des Dampfes bzw. der darin enthaltenen Wrasen zu senken.

Die Rohrleitung (31) verläuft weiter in einen Seitenholm des Druckgargerätes. Hier schließt sich eine Verzweigung (33) der Rohrleitung (31) an. An die Verzweigung (33) schließt sich oben ein Sicherheitsventil (34) an. Von diesem Sicherheitsventil (34) aus wird im Überdruckfall der Dampf aus der Rohrleitung (31) in einen hinteren, unteren Bereich des Gerätes weg vom Nutzer abgeleitet.

Unterhalb und in Strömungsrichtung hinter der Verzweigung (33) befindet sich ein Stellventil (35) in Form eines Motorventils mit Kugelhahn.

Insbesondere befindet sich als Teilabschnitt der Rohrleitung (31) zwischen dem Stellventil (35) und weiteren, im Folgenden noch zu erläuternden Elementen ein Abschnitt mit einem flexiblen Schlauchelement (36).

Dieses flexible Schlauchelement (36) ist insbesondere ein Silikonschlauch. Das flexible Schlauchelement (36) sorgt für eine mechanische Entkopplung des Garraums bzw. Kochbehälters (10) von den an das flexible Schlauchelement (36) anschließenden weiteren Elementen.

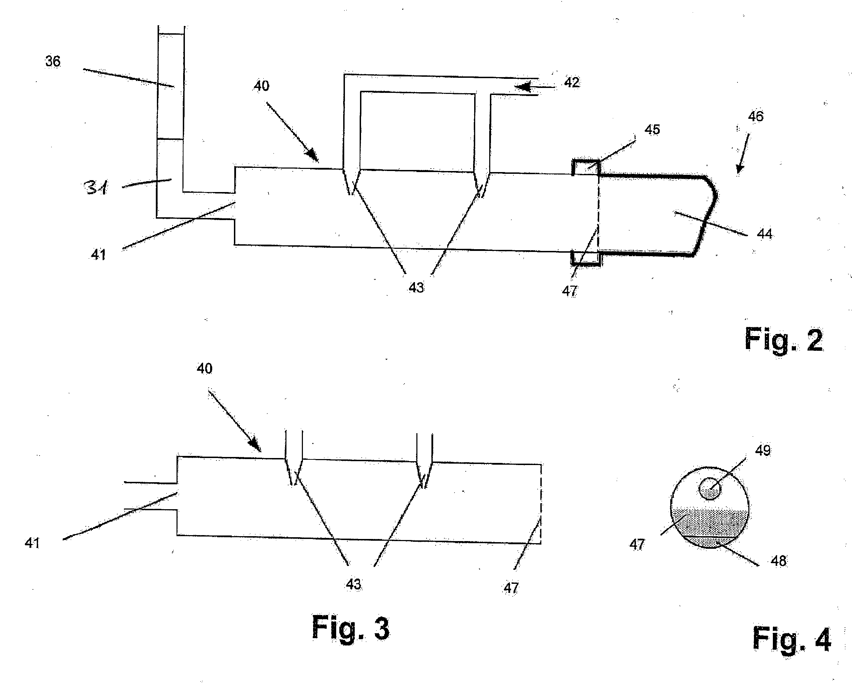

An das flexible Schlauchelement (36) schließt sich ein Ablöschkasten (40) an. Weitere Details des Ablöschkastens (40) werden noch im Folgenden in Zusammenhang mit der **Figur 2** erörtert.

Ferner ist ein Sensor (nicht dargestellt) vorgesehen, der den im Garraum (13) vorhandenen Druck und/oder die dort vorhandene Temperatur ermittelt. Diese Daten werden dann an eine Steuerungs- und Regelungseinrichtung (nicht dargestellt) weitergegeben. Dieser Steuerungs- und Regelungseinrichtung werden neben den Daten vom Sensor zum Beispiel auch direkte Befehle von einer Bedienungseinrichtung (nicht dargestellt) zugeführt und/oder auch weitere Befehle, die sich beispielsweise auf das zuzubereitende Speiseprodukt bzw. Kochgut (15) und die damit verbundenen Garprozesse beziehen.

Abhängig von den Daten des Sensors, der Bedienungseinrichtung und gegebenenfalls weiterer Elementen, öffnet die Steuerungs- und Regelungseinrichtung gegebenenfalls das Stellventil (35).

Dadurch kann dann nach der Durchführung des Gar- und Kochprozesses der im Garraum (13) befindliche, unter Überdruck stehende Wrasen durch die Öffnung (22), die Rohrleitung (31), die Durchführung (32), das Stellventil (35) und das flexible Schlauchelement (36) zum Eingang des Ablöschkastens (40) geführt werden.

In der Figur 2 ist der Ablöschkasten (40) näher dargestellt. Man sieht auf der linken Seite in der Figur 2, dass der Ablöschkasten (40) mit einer Querschnittserweiterung (41) beginnt. Hier wird über die Rohrleitung (31) mit dem dazwischen geschalteten flexiblen Schlauchelement (36) und dem Stellventil (35) der Dampf mit den Wrasen aus dem Garraum (13) eingeleitet. Innerhalb des Ablöschkastens (40) erweitert sich der Querschnitt von 22 mm auf 50 mm. Auf diese Weise wird die Strömungsgeschwindigkeit des Dampfes mit den Wrasen reduziert.

In einem Abstand von etwa 130 mm nach der Querschnittserweiterung (41) erfolgt eine Wassereinspritzung (43) mittels einer ersten Düse. Nach 260 mm in der dargestellten Ausführungsform erfolgt eine weitere Ablöschung mit einer zweiten Düse der Wassereinspritzung (43).

Dargestellt ist ferner eine Wasserzufuhr (42). Diese Wasserzufuhr (42) versorgt die Wassereinspritzung (43) mit der oder wie im dargestellten Beispiel den Düsen mit Kaltwasser. Dieses Wasser wird über die Wassereinspritzung (43) in den strömenden Dampf in den Ablöschkasten (40) eingespritzt.

Die Düsen sind Schlitzdüsen, durch die Kaltwasser eingesprüht wird. Durch die Wassereinspritzung (43) kondensiert ein erheblicher Teil der durch die Rohrleitung (31) zugeführten Dampfmenge durch das Verwirbeln mit dem eingesprühten Wasser.

Gegenüber anderen Düsenformen wie beispielsweise Kegeldüsen oder auch einer direkten Einspritzung über einen runden Querschnitt hat sich die Form einer Schlitzdüse für die Wassereinspritzung (43) in den dargestellten Ausführungsformen bewährt, da auf diese Weise eine Art Wasservorhang für die Wassereinspritzung (43) entsteht und das eingesprühte Wasser auch gut verwirbelt.

Der Ablöschkasten (40) geht hinter der Wassereinspritzung (43) in ein Ablaufrohr (44) über bzw. dieses Ablaufrohr (44) ist an ihn angeschlossen. Das Ablaufrohr (44) weist eine Dichtung (45) auf. Diese Dichtung (45) ist flexibel und besteht aus einem elastischen Material, so dass Schwingungen des Ablöschkastens (40) nicht in das Ablaufrohr (44) übertreten können.

Das Ablaufrohr (44) kann auch aus mehreren Rohrstücken bestehen, die vorzugsweise voneinander jeweils durch flexible Rohrstücke getrennt bzw. mit diesen Rohrstücken verbunden werden. Am Ende des Ablaufrohrs (44) befindet sich der Geräteausgang (46) und das Abwassernetz beginnt.

Die Ablaufrohre (44) sind Hochtemperaturrohre, die insbesondere aus Kunststoff bestehen.

Am Ende des Ablöschkastens (40) wird der Ablöschkasten (40) von den Ablaufrohren (44) durch eine Blende (47) getrennt. Das Kondensat des Wrasens sowie auch das über die Wassereinspritzung (43) eingespritzte Ablöschwasser passieren diese Blende (47) und fließen über das Ablaufrohr (44) zum Geräteausgang (46) und weiter in das Abwassernetz.

In der **Figur 3** ist der Ablöschkasten (40) nochmals vergrößert dargestellt. Man kann in dieser Figur gut sehen, dass der Wrasen zunächst die Querschnittserweiterung (43) beim Eintritt in den Ablöschkasten (40) passiert und es ist einleuchtend, dass er dabei auffächert, expandiert und zugleich die Strömungsgeschwindigkeit erheblich abnimmt. Das Verhältnis der Strömungsgeschwindigkeit des Dampfes vor und nach der Querschnittserweiterung (43) ist ungefähr umgekehrt proportional zum Quadrat des Radius des zur Verfügung stehenden Strömungsquerschnittes.

Zugleich kann man ebenfalls erkennen, dass innerhalb des Ablöschkastens (40) eine im Vergleich zu den Abmessungen der Rohrleitung (31) deutlich vergrößerte Oberfläche zur Verfügung steht, an der der Wrasen nach dem Passieren der Querschnittserweiterung (43) dann kondensieren kann, nachdem ihm mit der Wassereinspritzung (43) Kaltwasser zugeführt ist.

Gut zu erkennen ist auch, dass der Ablöschkasten (40) auf der rechten Seite durch die Blende (47) abgeschlossen wird. Die Blende (47) ist eine Art Abschlussblech, welches einen Dampfaustritt in Richtung des Geräteausgangs (46) weitgehend reduziert.

In der **Figur 4** kann man erkennen, wie die Blende (47) aufgebaut ist. In der Figur 4 ist eine Darstellung als Seitenansicht vorgenommen, also etwa von links in der Figur 3.

Man sieht, dass die Blende (47) ein Abschlussblech ist, welches im unteren Bereich ausgespart ist und einen Ablaufdurchlass (48) bildet.

Dadurch können das Ablöschwasser und der auskondensierte Dampf aus dem Ablöschkasten (40) an dessen Ausgang in Richtung Ablaufrohr (44) abfließen. Im oberen Drittel befindet sich zusätzlich ein Lufteinlass (49), welcher ein Ansaugen von Luft erlaubt. Bei der Kondensation des Dampfes entsteht ein Unterdruck, der durch diese Möglichkeit des Ansaugens von Luft ausgeglichen werden kann, wodurch für eine reibungslose Funktion gesorgt wird.

**Bezugszeichenliste**

| 10 | Kochbehälter |
| 11 | Boden |
| 12 | Mantel |
| 13 | Garraum beziehungsweise Innenraum |
| 15 | Speise oder Kochgut |
| 16 | Kippachse des Kochbehälters |
| | |
| 20 | Kochgerätedeckel |
| 21 | Dichtungsanordnung |
| 22 | Öffnung |

30     Anordnung zum Abführen des Dampfes bzw. der Wrasen
31     Rohrleitung
32     Durchführung durch die Kippachse (16)
33     Verzweigung
34     Überdruckventil
35     Stellventil
36     flexibles Schlauchelement

40     Ablöschkasten
41     Querschnittserweiterung
42     Wasseranschluss oder Wasserzufuhr
43     Wassereinspritzung
44     Ablaufrohr
45     Dichtung des Ablaufrohres
46     Geräteausgang
47     Blende
48     Ablaufdurchlass in der Blende (47)
49     Lufteinlass in der Blende (47)

## Patentansprüche

1. Druckgargerät für Kochgut (15) mit einem Kochbehälter (10), einem Kochgerätedeckel (20), einer Dichtungsanordnung (21) zwischen dem Kochbehälter (10) und dem Kochgerätedeckel (20) und einem durch Schließen des Kochgerätedeckels (20) druckdicht abgeschlossenen Garraum (13) sowie mit Mitteln zum Abbau des Druckes im Garraum (13), bei dem im Kochgerätedeckel (20) oder im Kochbehälter (10) oberhalb des Kochgutes (15) eine Öffnung (22) des Garraums (13) vorgesehen ist, welche über eine Rohrleitung (31) mit einer Anordnung (30) verbunden ist, über die aus dem Garraum entweichender Dampf einem Geräteausgang (46) zugeführt wird, bei dem die Anordnung (30) mittels eines Ventils (35) verschließbar ist und ihr eine Wassereinspritzung (43) zugeordnet ist, über die Wasser in den aus dem Garraum (13) über die Anordnung (30) entweichender Dampf einspritzbar ist, wobei zumindest ein Teil der Rohrleitung als flexibles Element (36) ausgebildet ist, **dadurch gekennzeichnet, dass** in der Anordnung (30) eine Blende (47) vorgesehen ist, die einen Lufteinlass (49) aufweist.

2. Druckgargerät nach Anspruch 1, **dadurch gekennzeichnet, dass** ein Abschnitt der Rohrleitung (31) als ein flexibles Schlauchelement (36) ausgebildet ist.

3. Druckgargerät nach Anspruch 2, **dadurch gekennzeichnet, dass** das flexible Element (36) ein Silikonschlauch ist.

4. Druckgargerät nach einem der vorstehenden Ansprüche, **dadurch gekennzeichnet, dass** die Rohrleitung (31) aus zwei oder mehr aufeinanderfolgenden Abschnitten besteht, **dass** an zumindest einer Verbindungsstelle zwischen zwei Abschnitten der Rohrleitung (31) die Abschnitte zusammengesteckt sind, und **dass** die Kontaktfläche zwischen den beiden zusammengesteckten Abschnitten der Rohrleitung (31) durch eine umlaufende flexible Dichtung ausgestaltet ist, welche das oder eines der flexiblen Elemente (36) bildet..

5. Druckgargerät nach einem der vorstehenden Ansprüche, **dadurch gekennzeichnet, dass** die Anordnung (30) einen Ablöschkasten (40) aufweist, und **dass** der Ablöschkasten (40) eine Querschnittserweiterung (41) relativ zur Rohrleitung (31) aufweist.

6. Druckgargerät nach Anspruch 5, **dadurch gekennzeichnet, dass** das flexible Schlauchelement (36) zwischen der Öffnung (22) des Garraums (13) und der Querschnittserweiterung (41) des Ablöschkastens (40) angeordnet ist.

7. Druckgargerät nach einem der vorstehenden Ansprüche, **dadurch gekennzeichnet, dass** das flexible Schlauchelement (36) und bevorzugt auch die übrige Rohrleitung (31) einen Querschnitt besitzen, welcher von der Öffnung (22) des Garraums (13) bis zum Ablöschkasten (40) konstant ist.

8. Druckgargerät nach einem der vorstehenden Ansprüche, **dadurch gekennzeichnet, dass** von der Blende (47) am Ausgang des Ablöschkastens (40) zum Geräteausgang (46) ein Ablaufrohr (44) vorgesehen ist, welches als Hochtemperaturrohr ausgebildet ist.

9. Druckgargerät nach Anspruch 8, **dadurch gekennzeichnet, dass** das Ablaufrohr (44) flexible Dichtungen aufweist, mit denen die Ablaufrohre (44) an dem Ablöschkasten (40) angeschlossen sind und/oder flexible Rohrabschnitte aufweist, die einzelne nicht flexible Rohrabschnitte miteinander verbinden.

10. Druckgargerät nach einem der vorstehenden Ansprüche, **dadurch gekennzeichnet, dass** die Wassereinspritzung (43) über mehrere Düsen, insbesondere mittels zwei Düsen, aufgebaut ist.

11. Druckgargerät nach einem der vorstehenden Ansprüche, **dadurch gekennzeichnet, dass** die Wassereinspritzung (43) in dem Ablöschkasten (40) zwischen der Querschnittserweiterung (41) und der Blende (47) angeordnet ist, und **dass** die Blende (47) zwischen der Wassereinspritzung (43) und den Geräteausgang (46) angeordnet

**12.** Druckgargerät nach einem der vorstehenden Ansprüche, **dadurch gekennzeichnet, dass** die Wassereinspritzung (43) in den Ablöschkasten (22) von oben erfolgt.

**13.** Druckgargerät nach einem der vorstehenden Ansprüche, **dadurch gekennzeichnet, dass** die Blende (47) einen Ablaufdurchlass (48) aufweist.

**14.** Druckgargerät nach einem der vorstehenden Ansprüche, **dadurch gekennzeichnet,**
**dass** der Kochbehälter (10) kippbar ist und eine Kippachse (16) aufweist und/oder
**dass** der Kochgerätedeckel (20) eine Drehachse aufweist, und
**dass** die Rohrleitung (31) durch die Kippachse (16) des Kochbehälters (10) oder die Drehachse des Kochgerätedeckels (20) verläuft.

**15.** Druckgargerät nach einem der vorstehenden Ansprüche, **dadurch gekennzeichnet, dass** in dem Ablöschkasten (40) die Wassereinspritzung (43) einen Abstand von zumindest 50 mm von der Querschnittserweiterung (41) aufweist.

**16.** Druckgargerät nach einem der vorstehenden Ansprüche, **dadurch gekennzeichnet, dass** das Ventil (35) ein Stellventil ist und zwischen der Öffnung (22) des Garraums (13) und dem Ablöschkasten (40) angeordnet ist.

**17.** Druckgargerät nach einem der vorstehenden Ansprüche, **dadurch gekennzeichnet, dass** die Wassereinspritzung (43) eine oder mehrere Schlitzdüsen aufweist.

**18.** Druckgargerät nach Anspruch 17, **dadurch gekennzeichnet, dass** die beiden Schlitzdüsen der Wassereinspritzung (43) einen Abstand von zumindest 50 mm voneinander besitzen.

**Claims**

**1.** A pressure-cooking device for cooking ingredients (15) with a cooking container (10), a cooking-device lid (20), a seal arrangement (21) between the cooking container (10) and the cooking-device lid (20), a pressure-tight cooking space (13) sealed by closing the cooking-device lid (20) and with means for releasing the pressure in the cooking space (13), in which, in the cooking-device lid (20) or in the cooking container (10), above the cooking ingredients (15), an opening (22) of the cooking space (13) is provided, which is connected via a pipe (31) with an arrangement (30), by means of which steam escaping from the cooking space is supplied to a device output (46),
in which the arrangement (30) is sealable by means of a valve (35), and a water injection (43) is associated with it, by means of which water can be injected into the steam escaping from the cooking space (13) via the arrangement (30), wherein at least a part of the pipe is embodied as a flexible element (36),
**characterised in that**
a shutter (47) is provided in the arrangement (30), which provides an air inlet (49).

**2.** The pressure-cooking device according to claim 1, **characterised in that**
a portion of the pipe (31) is embodied as a flexible hose element (36).

**3.** The pressure-cooking device according to claim 2, **characterised in that**
the flexible element (36) is a silicon hose.

**4.** The pressure-cooking device according to any one of the preceding claims, **characterised in that**
the pipe (31) comprises two or more successive portions,
that, at the least at a connecting position between two portions of the pipe (31), the portions are plugged together, and
that the contact surface between the two plugged-together portions of the pipe (31) is embodied through a peripheral flexible seal, which forms the, or one of the, flexible elements (36).

**5.** The pressure-cooking device according to any one of the preceding claims, **characterised in that**
the arrangement (30) provides a quenching box (40), and
that the quenching box (40) provides a cross-sectional widening (41) relative to the pipe (31).

**6.** The pressure-cooking device according to claim 5, **characterised in that**
the flexible hose element (36) is arranged between the opening (22) of the cooking space (13) and the cross-sectional widening (41) of the quenching box (40).

**7.** The pressure-cooking device according to any one of the preceding claims, **characterised in that**
the flexible hose element (36) and preferably also the rest of the pipe (31) provide a cross-section which is constant from the opening (22) of the cooking space (13) to the quenching box (40).

**8.** The pressure-cooking device according to any one of the preceding claims,
**characterised in that**,
from the shutter (47) at the output of the quenching box (40) to the device output (46), an outlet pipe (44) which is embodied as a high-temperature pipe is provided.

9. The pressure-cooking device according to claim 8, **characterised in that** the outlet pipe (44) provides flexible seals, with which the outlet pipes (44) are sealed to the quenching box (40) and/or provides flexible pipe portions which connect individual non-flexible pipe portions to one another.

10. The pressure-cooking device according to any one of the preceding claims, **characterised in that** the water injection (43) is built up via several nozzles, especially by means of two nozzles.

11. The pressure-cooking device according to any one of the preceding claims, **characterised in that** the water injection (43) is arranged in the quenching box (40) between the cross-sectional widening (41) and the shutter (47), and that the shutter (47) is arranged between the water injection (43) and the device output (46).

12. The pressure-cooking device according to any one of the preceding claims, **characterised in that** the water injection (43) into the quenching box (22) [??] takes place from above.

13. The pressure-cooking device according to any one of the preceding claims, **characterised in that** the shutter (47) provides an outlet passage (48).

14. The pressure-cooking device according to any one of the preceding claims, **characterised in that** the cooking container (10) is tiltable and provides a tilting axis (16) and/or that the cooking-device lid (20) provides an axis of rotation, and that the pipe (31) extends through the tilting axis (16) of the cooking container (10) or the axis of rotation of the cooking-device lid (20).

15. The pressure-cooking device according to any one of the preceding claims, **characterised in that**, in the quenching box (40), the water injection (43) provides a spacing distance of at least 50 mm from the cross-sectional widening (41).

16. The pressure-cooking device according to any one of the preceding claims, **characterised in that** the valve (35) is an adjustable valve and is arranged between the opening (22) of the cooking space (13) and the quenching box (40).

17. The pressure-cooking device according to any one of the preceding claims, **characterised in that** the water injection (43) provides one or more slotted nozzles.

18. The pressure-cooking device according to claim 17, **characterised in that** the two slotted nozzles of the water injection (43) provide a spacing distance of at least 50 mm from one another.

**Revendications**

1. Appareil de cuisson sous pression pour du produit à cuire (15), comprenant un récipient de cuisson (10), un couvercle d'appareil de cuisson (20), un agencement d'étanchéité (21) entre le récipient de cuisson (10) et le couvercle d'appareil de cuisson (20), et un compartiment de cuisson (13) fermé hermétiquement par fermeture du couvercle d'appareil de cuisson (20), ainsi que des moyens pour supprimer la pression dans le compartiment de cuisson (13), dans lequel une ouverture (22) du compartiment de cuisson (13) est prévue au-dessus du produit à cuire (15) dans le couvercle d'appareil de cuisson (20) ou dans le récipient de cuisson (10), qui est raccordée par l'intermédiaire d'une conduite (31) à un agencement (30), au travers duquel la vapeur s'échappant du compartiment de cuisson est envoyée dans une sortie d'appareil (46), dans lequel l'agencement (30) est obturable au moyen d'une soupape (35) et une injection d'eau (43) lui est attribuée, par laquelle de l'eau peut être injectée dans la vapeur s'échappant du compartiment de cuisson (13) au travers de l'agencement (30), au moins une partie de la conduite étant réalisée sous forme d'élément flexible (36), **caractérisé en ce que** il est prévu dans l'agencement (30) un obturateur (47) pourvu d'une admission d'air (49).

2. Appareil de cuisson sous pression selon la revendication 1, **caractérisé en ce qu'**une section de la conduite (31) est réalisée sous forme d'élément de tuyau flexible (36).

3. Appareil de cuisson sous pression selon la revendication 2, **caractérisé en ce que** l'élément flexible (36) est un tuyau flexible en silicone.

4. Appareil de cuisson sous pression selon l'une des revendications précédentes, **caractérisé en ce que** la conduite (31) est constituée de deux ou de plusieurs sections successives,
les sections sont emboîtées l'une dans l'autre en au moins un point d'assemblage entre deux sections de la conduite (31), et
la surface de contact entre les deux sections emboîtées l'une dans l'autre de la conduite (31) est configurée par un joint flexible entourant, qui forme le ou l'un des éléments flexibles (36).

5. Appareil de cuisson sous pression selon l'une des revendications précédentes, **caractérisé en ce que** l'agencement (30) comporte un caisson d'extinction (40), et
le caisson d'extinction (40) présente un élargissement de section transversale (41) par rapport à la conduite (31).

6. Appareil de cuisson sous pression selon la revendication 5, **caractérisé en ce que** l'élément de tuyau flexible (36) est disposé entre l'ouverture (22) du compartiment de cuisson (13) et l'élargissement de section transversale (41) du caisson d'extinction (40).

7. Appareil de cuisson sous pression selon l'une des revendications précédentes, **caractérisé en ce que** l'élément de tuyau flexible (36) et de préférence également le reste de la conduite (31) présentent une section transversale qui est constante de l'ouverture (22) du compartiment de cuisson (13) jusqu'au caisson d'extinction (40).

8. Appareil de cuisson sous pression selon l'une des revendications précédentes, **caractérisé en ce qu'**il est prévu un tuyau de décharge (44), qui est réalisé sous forme de tuyau à haute température, de l'obturateur (47) à la sortie du caisson d'extinction (40), jusqu'à la sortie d'appareil (46).

9. Appareil de cuisson sous pression selon la revendication 8, **caractérisé en ce que** le tuyau de décharge (44) présente des joints flexibles, par lesquels les tuyaux de décharge (44) sont raccordés au caisson d'extinction (40), et/ou présente des sections de tuyaux flexibles, qui assemblent entre elles des sections de tuyaux individuelles non flexibles.

10. Appareil de cuisson sous pression selon l'une des revendications précédentes, **caractérisé en ce que** l'injection d'eau (43) est construite de plusieurs buses, en particulier au moyen de deux buses.

11. Appareil de cuisson sous pression selon l'une des revendications précédentes, **caractérisé en ce que** l'injection d'eau (43) est disposée dans le caisson d'extinction (40) entre l'élargissement de section transversale (41) et l'obturateur (47), et **en ce que** l'obturateur (47) est disposé entre l'injection d'eau (43) et la sortie d'appareil (46).

12. Appareil de cuisson sous pression selon l'une des revendications précédentes, **caractérisé en ce que** l'injection d'eau (43) dans le caisson d'extinction (22) s'effectue à partir du haut.

13. Appareil de cuisson sous pression selon l'une des revendications précédentes, **caractérisé en ce que** l'obturateur (47) présente un passage de décharge (48).

14. Appareil de cuisson sous pression selon l'une des revendications précédentes, **caractérisé en ce que** le récipient de cuisson (10) est basculant et présente un axe de basculement (16) et/ou **en ce que** le couvercle d'appareil de cuisson (20) présente un axe de rotation, et **en ce que** la conduite (31) passe par l'axe de basculement (16) du récipient de cuisson (10) ou par l'axe de rotation du couvercle d'appareil de cuisson (20).

15. Appareil de cuisson sous pression selon l'une des revendications précédentes, **caractérisé en ce que**, dans le caisson d'extinction (40), l'injection d'eau (43) présente un écartement d'au moins 50 mm par rapport à l'élargissement de section transversale (41).

16. Appareil de cuisson sous pression selon l'une des revendications précédentes, **caractérisé en ce que** la soupape (35) est une vanne-pilote et est disposée entre l'ouverture (22) du compartiment de cuisson (13) et le caisson d'extinction (40).

17. Appareil de cuisson sous pression selon l'une des revendications précédentes, **caractérisé en ce que** l'injection d'eau (43) présente une ou plusieurs buses à fentes.

18. Appareil de cuisson sous pression selon la revendication 17, **caractérisé en ce que** les deux buses à fentes de l'injection d'eau (43) présentent un écartement mutuel d'au moins 50 mm.

Fig. 1

Fig. 2

Fig. 4

Fig. 3

**EP 2 567 641 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1238613 B1
- EP 1342441 B1
- DE 929170
- KR 1020080090629 A
- WO 2010030051 A1
- FR 2894801 A1
- EP 1342441 A1
- KR 200443109 Y1
- DE 102011107255